# FASCICULE DE BREVET EUROPEEN

(11) **EP 2 041 016 B1**
(45) Date de publication et mention de la délivrance du brevet: **23.12.2009**
(21) Numéro de dépôt: 07788822.0
(22) Date de dépôt: 31.05.2007
(51) Int. Cl.: B66C 1/44, B65G 9/00, B65G 43/00

(54) **APPAREIL DE MANUTENTION DE CHARGE**
LASTHANDHABUNGSVORRICHTUNG
LOAD HANDLING DEVICE

(30) Priorité: 07.06.2006 FR 0605034
(43) Date de publication de la demande: 01.04.2009
(73) Titulaire: Sapelem, 49070 Beaucouze (FR)
(72) Inventeur: BARRE, Pierre-Jean, 59046 Lille (FR); DENOEL, Pascal, 72000 Le Mans (FR); DUMETZ, Eric, 62580 Vimy (FR); HAUTIER, Jean-Paul, 59553 Esquerchin (FR); RUELLE, Olivier, 59000 Lille (FR)
(74) Mandataire: Laget, Jean-Loup
(86) Numéro de dépôt international: PCT/FR2007/000910
(87) Numéro de publication internationale: WO 2007/141411

(56) Documents cités:
- WO-A-98/43911
- JP-A- 10 072 198

## Description

La présente invention concerne un appareil de manutention de charge à transférer et/ou à maintenir à l'état statique, cet appareil comprenant au moins une structure porte-charge, au moins un actionneur de déplacement de la charge portée ou transportée par la structure et au moins un organe de commande de l'actionneur sensible aux déplacements parasites de la structure, tels que flexions, vibrations, déformations de la structure, lesdits déplacements parasites provoquant des modifications de la consigne de commande fournie par l'opérateur à l'organe de commande et l'émission d'un signal de commande parasité.

Les appareils de manutention dont l'organe de commande est sensible aux vibrations de la structure posent actuellement des problèmes à leurs utilisateurs. C'est par exemple le cas des appareils de levage d'une charge constitués d'un treuil actionné par un moteur, le treuil portant un câble auquel est accrochée la charge à manipuler. Dans ce type de dispositif, l'organe de commande est formé par une poignée fixée sur le câble. Cette poignée est généralement munie d'un capteur permettant de détecter une action exercée sur la poignée par l'opérateur. Des automatismes permettent ensuite d'imprimer au câble et donc à la charge le mouvement demandé par l'opérateur, de manière à ce que la charge suive la main de l'opérateur. Cependant, lorsque l'opérateur exerce une action sur l'organe de commande, le déplacement de la charge entraîne des oscillations de la structure porteuse du treuil. Ces oscillations entraînent un déplacement de la charge et du câble, donc de la poignée. Or, l'opérateur garde la poignée en main lors du déplacement de la charge. Ses oscillations induisent un mouvement relatif de la poignée par rapport à la main de l'opérateur, ayant pour effet d'envoyer une nouvelle consigne, non intentionnelle de la part de l'opérateur à l'actionneur via l'organe de commande de l'actionneur. Cette consigne, inverse au déplacement de la charge, entraîne de nouvelles oscillations qui se répercutent sur la main de l'opérateur et la poignée de commande. Ainsi, si l'opérateur conserve la poignée en main, voire essaye de compenser par réflexe les oscillations en agissant sur ladite poignée, les oscillations ont tendance à s'amplifier. Ce phénomène, dit de pompage, peut poser des problèmes de sécurité et d'ergonomie dans les ateliers utilisant de tels appareils.

Un exemple d'appareil de manutention du type précité est décrit dans la demande internationale WO98/43911. Dans cette demande, seul le problème du mimétisme entre le bras de l'opérateur et le comportement de la poignée en vue de fournir un signal d'entrée approprié est abordé. Un tel appareil ne comporte pas de moyens de détection des déplacements parasites de la structure de l'appareil de manutention de charge. De même, le document JP 10072198 a pour objet un dispositif apte à faire varier le comportement d'une poignée en fonction des gestes de l'opérateur.

Un but de l'invention est donc de proposer un appareil de manutention de charge équipé d'un organe de commande sujet aux oscillations de la structure porteuse dudit appareil dont la conception permet de minimiser voire d'annuler toute interférence des vibrations de la structure et/ou de la charge sur la consigne de commande délivrée par l'opérateur.

A cet effet, l'invention a pour objet un appareil de manutention de charge à transférer et/ou à maintenir à l'état statique, cet appareil comprenant au moins une structure, au moins un actionneur permettant le déplacement de la charge portée ou transportée par la structure et au moins un organe de commande de l'actionneur sensible aux déplacements parasites de la structure, tels que flexions, vibrations, déformations de la structure, lesdits déplacements parasites provoquant des modifications de la consigne de commande fournie par l'opérateur à l'organe de commande et l'émission d'un signal de commande parasité, **caractérisé en ce que** l'appareil comporte des moyens de détection des déplacements parasites de la structure associés à des moyens de traitement du signal de commande parasité afin de limiter ou supprimer toute influence desdits déplacements parasites dans le signal de commande parasité et obtenir un signal de commande conforme à la consigne de commande fournie par l'opérateur.

L'utilisation de moyens de détection des déplacements parasites de la structure associés à des moyens de correction de ces déplacements permet de minimiser voire de supprimer tout mouvement parasite sur la charge, et par suite le phénomène de pompage fréquent dans ce type d'appareil en l'absence de correction.

Il est à noter que les déplacements parasites de la structure peuvent avoir d'autres origines que le mouvement de la charge elle-même.

L'invention sera bien comprise à la lecture de la description suivante d'exemples de réalisation, en référence aux dessins annexés dans lesquels :
La figure 1 représente une vue d'ensemble d'un exemple de mode de réalisation d'un appareil de manutention dont l'organe de commande est sensible aux vibrations de la structure porteuse.
La figure 2A représente, de manière schématique, une structure de traitement et d'analyse des données servant au contrôle intelligent de l'actionneur par mesure directe des vibrations, l'organe de commande de l'actionneur comprenant un capteur détectant directement l'action de l'opérateur, par exemple sur une poignée de commande.
La figure 2B représente, de manière schématique, une structure de traitement et d'analyse des données servant au contrôle intelligent de l'actionneur par mesure indirecte des vibrations, l'organe de commande de l'actionneur étant positionné au voisinage de l'organe de déplacement de la charge et étant constitué par un capteur apte à détecter l'action de l'opérateur, par exemple sur la charge.
La figure 2C représente, de manière schématique, une structure de traitement et d'analyse des données servant au contrôle intelligent de l'actionneur par mesure directe des vibrations, dans laquelle l'organe de commande de l'actionneur comprend des moyens de mesure indirecte de l'action de l'opérateur sur la charge ou sur l'organe de déplacement de la charge.
La figure 3 représente un exemple de signal perturbé par les vibrations de la structure.
La figure 4 représente le signal de la figure 3 traité pour obtenir un signal représentant les vibrations de la structure.
La figure 5 représente le signal de la figure 3 purgé de la partie considérée comme représentative des vibrations de la structure et qui correspond à l'intention de déplacement de l'opérateur.

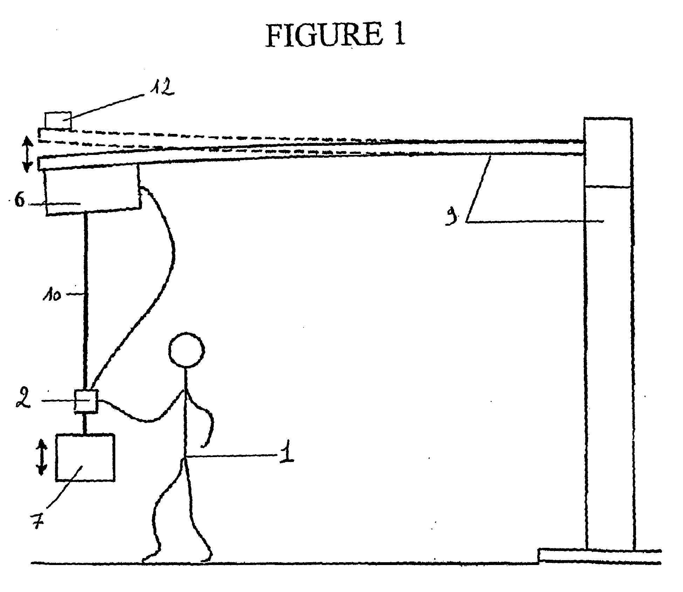

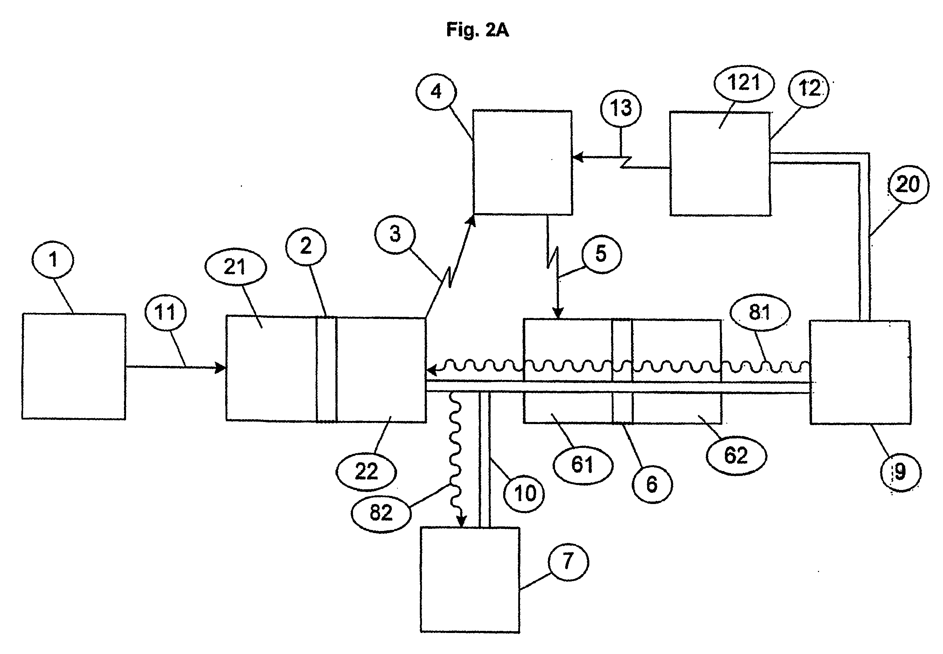

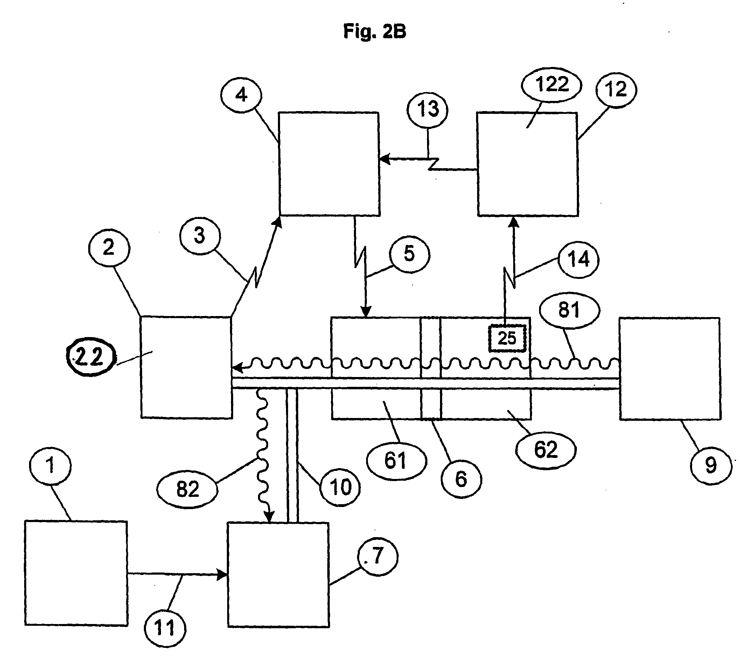

Comme représenté à la figure 1, l'invention concerne tout particulièrement les appareils de manutention de charge 7 à transférer et/ou à maintenir à l'état statique, cet appareil comprenant au moins une structure 9 porte-charge, au moins un actionneur 6 de déplacement de la charge 7 portée ou transportée par la structure 9 et au moins un organe 2 de commande de l'actionneur 6 sensible aux déplacements parasites de la structure, tels que flexions, vibrations, déformations de la structure, lesdits déplacements parasites provoquant des modifications de la consigne 11 de commande fournie par l'opérateur 1 à l'organe 2 de commande de l'actionneur 6. Dans les figures, les déplacements parasites de la structure 9 ayant une incidence sur l'organe 2 de commande sont représentés en 81 et en 82 pour ceux ayant une incidence sur la charge 7. Dans ces appareils, l'actionneur 6, qui présente une partie 62 solidaire de la structure 9 et une partie 61 mobile par rapport à la structure 9, comprend au moins un organe 10 de déplacement, en particulier de levage de la charge, tel qu'un treuil associé à un câble, une chaîne ou une courroie, dont le maniement, en particulier l'enroulement est commandé par un effecteur, tel qu'un moteur, un vérin ou un tube rétractable. Dans l'exemple représenté à la figure 1, l'actionneur 6 est constitué d'un treuil muni d'un câble de levage de la charge dont l'enroulement est commandé par un moteur. Ce moteur permet d'enrouler ou de dérouler le câble de levage suivant la consigne fournie par l'opérateur. Ce moteur peut également être monté sur une poutre coulissante, voire à coulissement lui-même sur ladite poutre, de manière à autoriser le déplacement de la charge 1 selon trois axes. Dans l'appareil de manutention de charges représenté à la figure 1, la structure 9 porteuse est constituée d'une poutre simple équipant l'extrémité d'un mât pour former un ensemble de type potence. L'organe 2 de commande de l'actionneur 6 peut affecter un grand nombre de formes. Ainsi, dans les figures 2A, 2B, l'organe 2 de commande de l'actionneur 6 comprend au moins un capteur 22 de mesure directe de l'action de l'opérateur apte à détecter l'action de l'opérateur sur la charge 7 ou sur l'organe 10 de déplacement de la charge 7 ou sur un organe d'actionnement, tel qu'une poignée 21, et à transformer cette action en un signal de commande de l'actionneur 6, dit signal 3 de commande parasité de l'actionneur 6. Dans le cas particulier d'un organe d'actionnement, tel qu'une poignée 21, par l'intermédiaire duquel le capteur 22 de mesure détecte l'action de l'opérateur, cet organe d'actionnement est positionné soit sur l'organe 10 de déplacement de la charge, soit sur la charge elle-même, soit sur la structure 9. Dans l'exemple de la figure 2A, l'organe 2 de commande de l'actionneur 6 est constitué d'une poignée 21 de commande équipant le câble de levage de la charge 7, cette poignée 21 coopérant avec un capteur 22 permettant de détecter une action de la main d'un opérateur 1 sur ladite poignée 21 et de transformer cette action en un signal de commande de l'actionneur 6. Ainsi, l'opérateur peut manoeuvrer la charge 7 tout en restant à proximité de celle-ci. L'organe 2 de commande est généralement constitué de deux parties, l'une fixe par rapport à l'organe de levage ou à la structure, l'autre mobile afin que l'opérateur puisse agir sur la partie mobile de l'organe par rapport à l'autre. Le capteur est disposé dans l'une quelconque des deux parties, de manière à ce que le déplacement d'une partie de l'organe de commande par rapport à l'autre induise une action détectée par ledit capteur. En revanche, un mouvement parasite de la structure entraîne un déplacement de l'organe de levage ou de la structure 9 par rapport à la main de l'opérateur 1 et induit donc un signal de consigne parasite, qui peut engendrer de nouvelles vibrations parasites et ainsi amplifier le phénomène de pompage tant que la main de l'opérateur 1 est en contact avec l'organe 2 de commande.

Dans le mode de réalisation décrit ci-dessus, l'actionneur 6 comprend au moins un organe 10 de déplacement en particulier de levage de la charge et l'organe 2 de commande de l'actionneur 6 comprend une poignée 21 de commande équipant ledit organe de levage et un capteur 22. L'action de la main de l'opérateur 1 sur ledit organe 2 de commande est donc soumise aux déplacements parasites de la structure et donc transformée en un signal de commande de l'actionneur 6, dit signal 3 de commande parasité.

Dans un autre mode de réalisation, non représenté, l'actionneur 6 comprend au moins un organe 10 de déplacement, en particulier de levage, de la charge 7 et l'organe 2 de commande de l'actionneur 6 comprend une poignée de commande portée par la structure 9, cette poignée coopérant avec un capteur apte à détecter l'action de la main de l'opérateur 1 sur ladite poignée et à transformer cette action en un signal de commande de l'actionneur 6 dit signal de commande parasité 3. En effet, le positionnement de l'organe 2 de commande sur la structure 9 vibrante amène cet organe 2 de commande à être à nouveau sensible aux vibrations.

Dans un autre mode de réalisation représenté à la figure 2B, l'actionneur 6 comprend toujours au moins un organe 10 de déplacement, en particulier de levage de la charge et l'organe 2 de commande de l'actionneur 6 comprend au moins un capteur 22 de mesure, apte à détecter l'action de l'opérateur sur la charge 7 ou sur l'organe 10 de déplacement de la charge 7, ce capteur étant positionné au voisinage de l'organe 10 de déplacement de la charge 7. Ce capteur est ainsi apte à détecter directement l'action de l'opérateur 1 sur la charge 7 ou sur l'organe 10 de déplacement de la charge 7 qui font office d'organe d'actionnement et à transformer cette action en un signal de commande de l'actionneur 6, dit signal 3 de commande parasité de l'actionneur 6. A nouveau, dans ce cas, l'organe 2 de commande est sensible aux vibrations, représentées en 82 aux figures, ces vibrations étant transmises par la structure à l'actionneur et par suite à la charge.

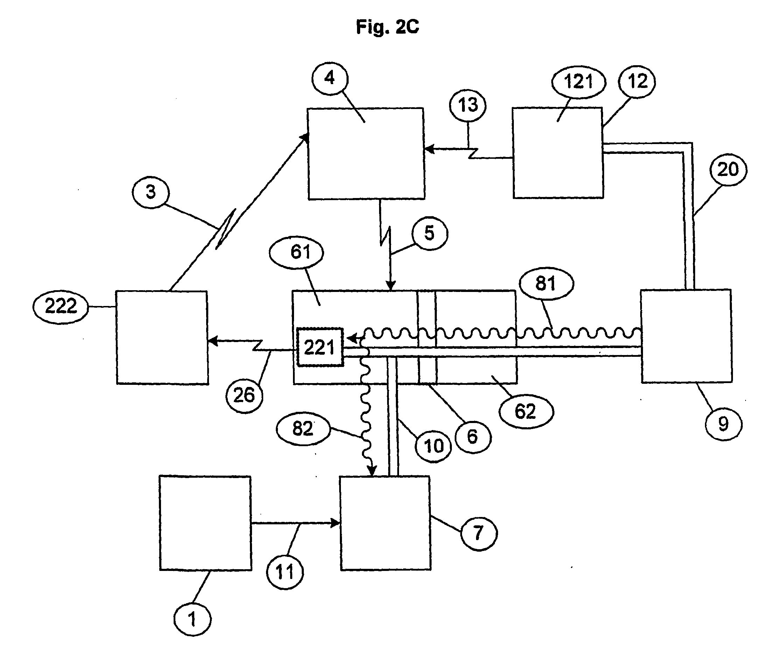

Enfin, dans encore un autre mode de mode de réalisation représenté à la figure 2C, l'actionneur 6 comprend au moins un organe 10 de déplacement, en particulier de levage, de la charge et l'organe 2 de commande de l'actionneur comprend des moyens 221 de mesure indirecte de l'action 11 de l'opérateur 1 sur la charge 7 ou sur l'organe 10 de déplacement, tels que des moyens de mesure de l'état de l'actionneur 6, en vue de l'émission d'un signal 26 de mesure indirecte de l'action de l'opérateur, ces moyens 221 de mesure étant associés à des moyens 222 de traitement du signal 26 mesuré en vue d'extraire dudit signal 26 mesuré la partie du signal correspondant à l'action de l'opérateur 1, dite signal 3 de commande parasité de l'actionneur 6.

Indépendamment du type de l'organe 2 de commande, il en résulte à chaque fois l'émission, en direction de l'actionneur, d'un signal 3 de commande, dit signal de commande parasité 3, en raison du fait que ce signal de commande est soumis aux vibrations 81, 82 de la structure et/ou de la charge. Ce signal de commande parasité 3 est le résultat d'une consigne de commande 11 fournie par l'opérateur 1 agissant soit directement sur ledit organe 2 de commande, soit de manière indirecte à travers une action de l'opérateur sur la charge 7 détectée par ledit organe 2 de commande.

De manière caractéristique à l'invention, l'appareil de manutention de charges, objet de l'invention, comporte des moyens 12 de détection des déplacements parasites 81, 82 de la structure 9 associés à des moyens 4 de traitement du signal de commande parasité 3 afin de limiter ou de supprimer toute influence desdits déplacements parasites 81, 82 dans le signal de commande 5 de l'actionneur 6 et obtenir ainsi un signal de commande 5 conforme au souhait, c'est-à-dire à la consigne de commande 11 de l'opérateur 1. Les moyens 12 de détection sont généralement des capteurs qui permettent, directement 121 ou indirectement 122, de déduire l'état de vibration de la structure 9 porteuse.

Dans un premier mode de réalisation conforme à la figure 2A, les moyens 12 de détection des déplacements parasites de la structure 9 sont constitués par des moyens 121 de mesure directe desdits déplacements, tels qu'un accéléromètre, ou tout autre capteur sensible aux vibrations mécaniques, en vue de l'émission d'un signal 13 de mesure directe des déplacements parasites de la structure 9 en direction des moyens 4 de traitement du signal de commande parasité 3. Le signal 20 enregistré par l'accéléromètre 121 correspond alors à une mesure directe des vibrations 81 de la structure 9 qui peuvent être déterminées ainsi avec précision. On dispose alors précisément du signal 13 engendrant des consignes parasites et on peut traiter le signal de commande parasité 3 en conséquence.

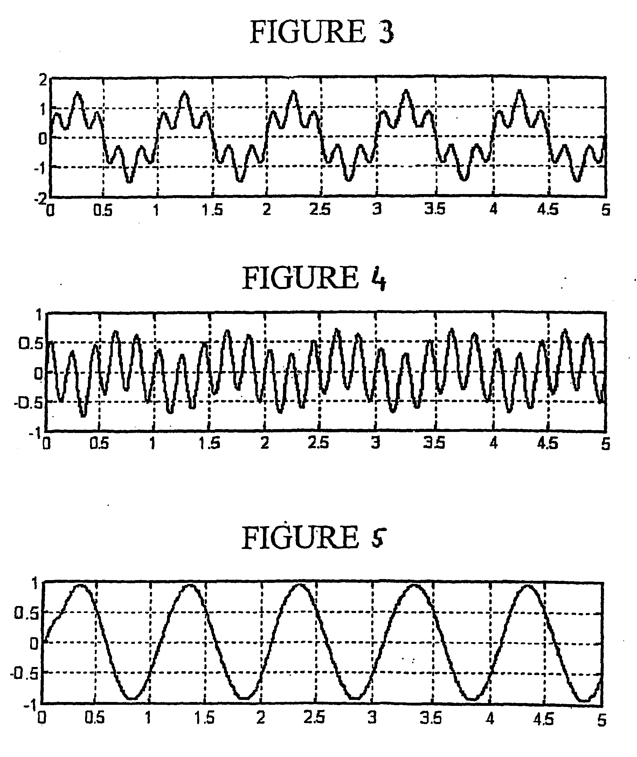

Dans un autre mode de réalisation conforme à la figure 2B, les moyens 12 de détection des déplacements parasites 81 de la structure 9 comprennent des moyens 25 de mesure indirecte desdits déplacements, tels que des moyens de mesure de l'état de l'actionneur 6, en vue de l'émission d'un signal 14 de mesure, ces moyens 25 de mesure étant associés à des moyens 122 de traitement, en particulier de filtration, du signal 14 mesuré en vue d'extraire, dudit signal 14 mesuré, la partie du signal correspondant aux déplacements parasites 81 de la structure 9, dite signal 13 de mesure indirecte desdits déplacements parasites de la structure 9. Dans l'exemple représenté à la figure 2B, un capteur 25 placé au niveau de la partie 62 de l'actionneur 6 solidaire de la structure 9 émet en direction des moyens de mesure et de traitement 122 un signal 14 correspondant à l'état de l'actionneur 6. Les moyens 122 émettent à partir de ce signal un signal de mesure 13, dit signal de mesure indirecte, des perturbations ou déplacements parasites en direction des moyens 4 de traitement du signal de commande parasité 3. Dans le cas présent, la connaissance d'une valeur de l'état du moteur de l'actionneur 6 ainsi qu'une bonne connaissance de la structure 9, permettent de déduire quelle partie du signal mesuré 14, correspondant à l'état de l'actionneur, est imputable aux vibrations parasites 81 de la structure 9 porteuse. Il suffit pour cela de connaître le comportement théorique de la structure 9, notamment ses fréquences propres de vibration. C'est ce cas qui est représenté aux figures 3 à 5. La courbe de la figure 3 représente un signal de mesure 14. Ce signal 14 est un exemple utilisé pour illustrer le traitement qu'on fait subir à ce signal. Le signal de la figure 3 est la combinaison de deux signaux, l'un continu, correspondant à la puissance nécessaire au déplacement imposé par l'opérateur 1, est représenté à la figure 5 et correspond à la consigne de commande 11, l'autre plutôt oscillant, correspond au signal 13 des vibrations parasites 81 de la structure 9 au niveau de la puissance de l'actionneur 6 et est représenté à la figure 4. L'exemple illustré par les courbes 3 à 5 montrent que dans un cas extrême où le signal 11 d'un opérateur simulé est périodique, on arrive à extraire du signal 14 par des moyens 122, la composition du signal 13 provenant de la vibration 81 de la structure 9. Ainsi, ultérieurement, les moyens de détection utilisant les moyens de mesure indirecte 122 fournissent des données permettant de séparer, dans un signal de commande parasité 3 les composantes intention ou consigne de commande 11 de l'opérateur du signal des composantes vibrations 81 de la structure 9 dudit signal.

Quels que soient les moyens 12 de détection utilisés, on dispose donc du signal 13 de mesure des déplacements parasites qui permet, par association avec le signal de commande parasité 3, d'obtenir un signal de commande 5 de l'actionneur 6 correspondant à la consigne de commande 11 réellement voulue par l'opérateur 1. Le traitement ultérieur du signal 13 de mesure des déplacements parasites est le même pour les deux modes de réalisation précédemment décrits. Pour simplifier les schémas, le signal 13 de mesure des perturbations ou vibrations porte la même référence qu'il résulte d'une mesure directe par des moyens 121 des perturbations ou vibrations ou d'une mesure indirecte par des moyens 25 et 122 des perturbations ou vibrations. En effet, les moyens 4 de traitement du signal de commande parasité 3 comprennent au moins des moyens qui soustraient du signal de commande parasité 3 les éléments perturbateurs correspondant soit au signal de mesure directe 13 des déplacements parasites de la structure 9, soit, au signal 13 de mesure indirecte des perturbations de la structure, avant réinjection du signal de commande traité 5 vers l'actionneur 6 pour obtenir un signal de commande 5. de l'actionneur conforme aux souhaits de l'opérateur, c'est-à-dire à la consigne 11 de commande. Le signal 13 correspondant aux déplacements parasites de la structure est donc soustrait du signal de commande parasité 3 (consigne 11 de déplacement voulu + perturbation due à la structure) de manière à ne garder que la consigne de commande 11 voulue par l'opérateur. Ce traitement a pour effet d'atténuer fortement les vibrations parasites dans la commande. Ainsi, on évite tout phénomène de pompage et d'amplification des répercussions de ces vibrations parasites sur la consigne. Il doit être noté que dans ce qui précède, les termes perturbations, vibrations, déplacements parasites doivent être considérés comme équivalents. Il doit aussi être noté que les traitements du signal de commande 3 parasité décrits ci-dessus réalisés par les moyens 4 de traitement du signal ne sont pas exclusifs d'autres traitements, mais qu'ils peuvent être combinés à d'autres traitements.

## Revendications

1. Appareil de manutention de charge (7) à transférer et/ou à maintenir à l'état statique, cet appareil comprenant au moins une structure (9), au moins un actionneur (6) permettant le déplacement de la charge (7) portée ou transportée par la structure (9) et au moins un organe (2) de commande de l'actionneur (6) sensible aux déplacements parasites de la structure (9), tels que flexions, vibrations, déformations de la structure (9), lesdits déplacements parasites provoquant des modifications de la consigne (11) de commande fournie par l'opérateur à l'organe (2) de commande et l'émission d'un signal de commande parasité (3),
**caractérisé en ce que** l'appareil comporte des moyens (12) de détection des déplacements parasites de la structure (9) associés à des moyens (4) de traitement du signal de commande parasité (3) afin de limiter ou supprimer toute influence desdits déplacements parasites dans le signal de commande parasité (3) et obtenir un signal de commande (5) conforme à la consigne (11) de commande fournie par l'opérateur (1).

2. Appareil de manutention de charge (7) selon la revendication 1,
**caractérisé en ce que** les moyens (12) de détection des déplacements parasites de la structure (9) sont constitués par des moyens (121) de mesure directe desdits déplacements, tels qu'un accéléromètre, ou tout autre capteur sensible à des vibrations mécaniques, en vue de l'émission d'un signal (13) de mesure directe des déplacements parasites de la structure (9).

3. Appareil de manutention de charges (7) selon la revendication 1,
**caractérisé en ce que** les moyens (12) de détection des déplacements parasites (81) de la structure (9) comprennent des moyens (25) de mesure indirecte desdits déplacements, tels que des moyens de mesure de l'état de l'actionneur (6), en vue de l'émission d'un signal (14) de mesure, ces moyens (25) de mesure étant associés à des moyens (122) de traitement du signal (14) mesuré en vue d'extraire dudit signal (14) mesuré la partie du signal correspondant aux déplacements parasites (81) de la structure (9), dit signal (13) de mesure indirecte desdits déplacements parasites de la structure (9).

4. Appareil de manutention de charges (7) selon l'une des revendications 2 et 3,
**caractérisé en ce que** les moyens (4) de traitement du signal de commande parasité (3) comprennent au moins des moyens qui soustraient du signal de commande parasité (3) les éléments perturbateurs correspondant soit au signal de mesure directe (13) des déplacements parasites de la structure (9), soit au signal de mesure indirecte (13) des déplacements parasites de la structure (9) avant réinjection du signal de commande traité (5) vers l'actionneur (6) pour obtenir un signal de commande (5) de l'actionneur (6) conforme aux souhaits de l'opérateur (1).

5. Appareil de manutention de charges (7) selon l'une des revendications 1 à 4,
**caractérisé en ce que** l'actionneur (6) comprend au moins un organe (10) de déplacement, en particulier de levage, de la charge (7) et **en ce que** l'organe (2) de commande de l'actionneur (6) comprend au moins un capteur (22) de mesure directe de l'action de l'opérateur apte à détecter l'action de l'opérateur sur la charge (7), ou sur l'organe (10) de déplacement de la charge (7), ou sur un organe d'actionnement, tel qu'une poignée (21), et à transformer cette action en un signal de commande de l'actionneur (6), dit signal (3) de commande parasité.

6. Appareil de manutention de charges (7) selon la revendication 5,
**caractérisé en ce que** l'organe d'actionnement, tel qu'une poignée (21), par l'intermédiaire duquel le capteur (22) de mesure détecte l'action de l'opérateur, est positionné soit sur l'organe (10) de déplacement de la charge, soit sur la charge (7) elle-même, soit sur la structure (9).

7. Appareil de manutention de charges (7) selon la revendication 5,
**caractérisé en ce que** le capteur (22) de mesure, apte à détecter l'action de l'opérateur sur la charge (7) ou sur l'organe (10) de déplacement de la charge est positionné au voisinage de l'organe (10) de déplacement de la charge (7).

8. Appareil de manutention de charges (7) selon l'une des revendications 1 à 4,
**caractérisé en ce que** l'actionneur (6) comprend au moins un organe (10) de déplacement, en particulier de levage, de la charge et **en ce que** l'organe (2) de commande de l'actionneur comprend des moyens (221) de mesure indirecte de l'action (11) de l'opérateur (1) sur la charge (7) ou sur l'organe (10) de déplacement, tels que des moyens de mesure de l'état de l'actionneur (6), en vue de l'émission d'un signal (26) de mesure indirecte de l'action de l'opérateur, ces moyens (221) de mesure étant associés à des moyens (222) de traitement du signal (26) mesuré en vue d'extraire dudit signal (26) mesuré la partie du signal correspondant à l'action de l'opérateur (1), dite signal (3) de commande parasité.

9. Appareil de manutention de charges (7) selon l'une des revendications 1 à 8,
**caractérisé en ce que** l'actionneur (6) comprend au moins un organe (10) de déplacement, en particulier de levage, de la charge, tel qu'un treuil associé à un câble, une chaîne ou une courroie, dont le maniement, en particulier l'enroulement, est commandé par un effecteur, tel qu'un moteur, un vérin ou un tube rétractable.

## Claims

1. Load handling device (7) to be transferred and/or maintained in the static state, said device comprising at least one structure (9), at least one actuator (6) allowing the displacement of the load (7) carried or transported by the structure (9) and at least one member (2) for controlling the actuator (6) which is sensitive to parasitic displacements of the structure (9) such as bending, vibration or deformation of the structure (9), said parasitic displacements causing modifications to the control command (11) provided by the operator to the control member (2) and the emission of a spurious control signal (3),
**characterised in that** the device comprises means (12) for detecting parasitic displacements of the structure (9) associated with means (4) for processing the spurious control signal (3) in order to restrict or eliminate any influence of said parasitic displacements within the spurious control signal (3) and to obtain a control signal (5) in accordance with the control command (11) provided by the operator (1).

2. Load handling device (7) according to Claim 1, **characterised in that** the means (12) for detecting parasitic displacements of the structure (9) consist of means (121) for directly measuring said displacements, such as an accelerometer, or any other sensor which is sensitive to mechanical vibrations, in order to emit a signal (13) directly measuring the parasitic displacements of the structure (9).

3. Load handling device (7) according to Claim 1, **characterised in that** the means (12) for detecting parasitic displacements (81) of the structure (9) comprise means (25) for indirectly measuring said displacements, such as means for measuring the state of the actuator (6) in order to emit a measuring signal (14), said measuring means (25) being associated with means (122) for processing the measured signal (14) in order to remove from said measured signal (14) the part of the signal corresponding to the parasitic displacements (81) of the structure (9), known as the signal (13) indirectly measuring said parasitic displacements of the structure (9).

4. Load handling device (7) according to one of Claims 2 and 3, **characterised in that** the means (4) for processing the spurious control signal (3) comprise at least means which remove from the spurious control signal (3) the interfering elements, corresponding either to the signal (13) directly measuring the parasitic displacements of the structure (9), or to the signal (13) indirectly measuring the parasitic displacements of the structure (9), before feeding the processed control signal (5) back to the actuator (6) to obtain a control signal (5) of the actuator (6) which is in accordance with the wishes of the operator (1).

5. Load handling device (7) according to one of Claims 1 to 4, **characterised in that** the actuator (6) comprises at least one member (10) for displacing, in particular lifting, the load (7) and **in that** the member (2) for controlling the actuator (6) comprises at least one sensor (22) for directly measuring the action of the operator, designed to detect the action of the operator on the load (7) or on the member (10) for displacing the load (7), or on an actuating member, such as a handle (21), and to transform said action into a control signal of the actuator (6), known as a spurious control signal (3).

6. Load handling device (7) according to Claim 5, **characterised in that** the actuating member, such as a handle (21), by means of which the measuring sensor (22) detects the action of the operator, is positioned either on the member (10) for displacing the load, or on the load (7) itself, or on the structure (9).

7. Load handling device (7) according to Claim 5, **characterised in that** the measuring sensor (22), designed to detect the action of the operator on the load (7) or on the member (10) for displacing the load, is positioned in the vicinity of the member (10) for displacing the load (7).

8. Load handling device (7) according to one of Claims 1 to 4, **characterised in that** the actuator (6) comprises at least one member (10) for displacing, in particular lifting, the load and **in that** the member (2) for controlling the actuator comprises means (221) for indirectly measuring the action (11) of the operator (1) on the load (7) or on the displacement member (10), such as means for measuring the state of the actuator (6), in order to emit a signal (26) indirectly measuring the action of the operator, said measuring means (221) being associated with means (222) for processing the measured signal (26) in order to remove from said measured signal (26) the part of the signal corresponding to the action of the operator (1), known as the spurious control signal (3).

9. Load handling device (7) according to one of Claims 1 to 8, **characterised in that** the actuator (6) comprises at least one member (10) for displacing, in particular lifting, the load, such as a winch associated with a cable, a chain or a belt, of which the handling, in particular the winding, is controlled by an effector such as a motor, an actuator or a retractable tube.

## Patentansprüche

1. Gerät zur Handhabung einer Last (7), die zu bewegen und/oder in einem statischen Zustand zu halten ist, wobei das Gerät mindestens ein Tragwerk (9), mindestens ein Stellglied (6), das die Bewegung der von dem Tragwerk (9) getragenen oder beförderten Last (7) ermöglicht, und mindestens ein Element (2) zur Steuerung des Stellgliedes (6), das empfindlich auf Störbewegungen des Tragwerkes (9) wie Biegungen, Schwingungen und Verformungen des Tragwerkes (9) reagiert, umfasst, wobei die Störbewegungen Änderungen des von dem Bediener an das Steuerelement (2) gelieferten Steuerbefehls (11) und die Aussendung eines ungewollten Steuersignals (3) hervorrufen, **dadurch gekennzeichnet, dass** das Gerät Mittel (12) zur Erfassung der Störbewegungen des Tragwerkes (9) umfasst, die Mitteln (4) zur Verarbeitung des ungewollten Steuersignals (3) zugeordnet sind, um jeden Einfluss der Störbewegungen in dem ungewollten Steuersignal (3) zu begrenzen oder zu unterdrücken und ein Steuersignal (5) zu erhalten, das dem von dem Bediener (1) gelieferten Steuerbefehl (11) entspricht.

2. Gerät zur Handhabung einer Last (7) nach Anspruch 1,
**dadurch gekennzeichnet, dass** die Mittel (12) zur Erfassung der Störbewegungen des Tragwerkes (9) von Mitteln (121) zur direkten Bewegungsmessung, beispielsweise einem Beschleunigungsmesser oder jedem anderen auf mechanische Schwingungen empfindlich reagierenden Messaufnehmer, gebildet werden, um ein Signal (13) der direkten Messung der Störbewegungen des Tragwerkes (9) auszusenden.

3. Gerät zur Handhabung einer Last (7) nach Anspruch 1,
**dadurch gekennzeichnet, dass** die Mittel (12) zur Erfassung der Störbewegungen (81) des Tragwerkes (9) Mittel (25) zur indirekten Bewegungsmessung, beispielsweise Mittel zur Messung des Zustandes des Stellgliedes (6), umfassen, um ein Messsignal (14) auszusenden, wobei die Messmittel (25) Mitteln (122) zur Verarbeitung des Messsignals (14) zugeordnet sind, um von dem Messsignal (14) den Signalanteil zu entnehmen, der den Störbewegungen (81) des Tragwerkes (9) entspricht, das heißt, das Signal (13) der indirekten Messung der Störbewegungen des Tragwerkes (9).

4. Gerät zur Handhabung einer Last (7) nach einem der Ansprüche 2 und 3, **dadurch gekennzeichnet, dass** die Mittel (4) zur Verarbeitung des ungewollten Steuersignals (3) mindestens Mittel umfassen, die dem ungewollten Steuersignal (3) die Störanteile, die entweder dem Signal (13) der direkten Messung der Störbewegungen des Tragwerkes (9) oder dem Signal (13) der indirekten Messung der Störbewegungen des Tragwerkes (9) entsprechen, entziehen, bevor das behandelte Steuersignal (5) erneut an das Stellglied (6) gesandt wird, um ein den Wünschen des Bedieners (1) entsprechendes Signal (5) zur Steuerung des Stellgliedes (6) zu erhalten.

5. Gerät zur Handhabung einer Last (7) nach einem der Ansprüche 1 bis 4, **dadurch gekennzeichnet, dass** das Stellglied (6) mindestens ein Element (10) zum Bewegen, insbesondere zum Anheben, der Last (7) umfasst und dass das Element (2) zur Steuerung des Stellgliedes (6) mindestens einen Messaufnehmer (22) zur direkten Messung der Einwirkung des Bedieners umfasst, der die Einwirkung des Bedieners auf die Last (7) oder auf das Element (10) zum Bewegen der Last (7) oder auf ein Betätigungselement, beispielsweise einen Handgriff (21), zu erfassen und die Einwirkung in ein Signal zur Steuerung des Stellgliedes (6), das ungewollte Steuersignal (3), umzuwandeln geeignet ist.

6. Gerät zur Handhabung einer Last (7) nach Anspruch 5,
**dadurch gekennzeichnet, dass** das Betätigungselement, beispielsweise ein Handgriff (21), über das der Messaufnehmer (22) die Einwirkung des Bedieners erfasst, entweder an dem Element (10) zum Bewegen der Last oder an der Last (7) selbst oder an dem Tragwerk (9) angeordnet ist.

7. Gerät zur Handhabung einer Last (7) nach Anspruch 5,
**dadurch gekennzeichnet, dass** der Messaufnehmer (22), der die Einwirkung des Bedieners auf die Last (7) oder auf das Element (10) zum Bewegen der Last zu erfassen geeignet ist, in der Nähe des Elementes (10) zum Bewegen der Last (7) angeordnet ist.

8. Gerät zur Handhabung einer Last (7) nach einem der Ansprüche 1 bis 4, **dadurch gekennzeichnet, dass** das Stellglied (6) mindestens ein Element (10) zum Bewegen, insbesondere zum Anheben, der Last umfasst und dass das Element (2) zur Steuerung des Stellgliedes Mittel (221) zur indirekten Messung der Einwirkung (11) des Bedieners (1) auf die Last (7) oder auf ein Element (10) zum Bewegen, beispielsweise Mittel zur Messung des Zustandes des Stellgliedes (6), umfasst, um ein Signal (26) der indirekten Messung der Einwirkung des Bedieners auszusenden, wobei die Messmittel (221) Mitteln (222) zur Verarbeitung des Messsignals (26) zugeordnet sind, um von dem Messsignal (26) den Signalanteil zu entnehmen, der der Einwirkung des Bedieners(1) entspricht, das heißt, das ungewollte Steuersignal (3).

9. Gerät zur Handhabung einer Last (7) nach einem der Ansprüche 1 bis 8, **dadurch gekennzeichnet, dass** das Stellglied (6) mindestens ein Element (10) zum Bewegen, insbesondere zum Anheben, der Last umfasst, beispielsweise eine einem Seil, einer Kette oder einem Riemen zugeordnete Winde, dessen Bedienung, insbesondere das Aufrollen, von einem Aktor, beispielsweise einem Motor, einem Zylinder oder einem Schubrohr, gesteuert wird.
